# FASCICULE DE BREVET EUROPEEN

(11) **EP 3 228 229 B1**
(45) Date de publication et mention de la délivrance du brevet: **02.10.2019**
(21) Numéro de dépôt: 17165215.9
(22) Date de dépôt: 06.04.2017
(51) Int. Cl.: A47J 27/09, A47J 27/08

(54) **AUTOCUISEUR À SECURITÉ AMELIORÉE**
SCHNELLKOCHTOPF MIT VERBESSERTER SICHERHEIT
PRESSURE COOKER WITH IMPROVED SAFETY

(30) Priorité: 08.04.2016 FR 1653140
(43) Date de publication de la demande: 11.10.2017
(73) Titulaire: SEB S.A., 69130 Ecully (FR)
(72) Inventeur: JULIEN, Guillaume, 21260 SELONGEY (FR); CHAMEROY, Eric, 21260 VERONNES (FR); RHETAT, Eric, 21000 DIJON (FR)
(74) Mandataire: Weber, Jean-François

(56) Documents cités:
- DE-U1- 29 508 504
- FR-A1- 2 782 257
- US-A- 4 276 990

## Description

La présente invention se rapporte au domaine technique général des appareils de cuisson d'aliments sous pression dans une atmosphère chargée en vapeur, de préférence à usage domestique, et en particulier aux appareils dénommés cuiseur-vapeur ou autocuiseur qui sont équipés d'un joint d'étanchéité mis en place entre leur cuve et leur couvercle pour assurer, en fonctionnement, l'étanchéité entre l'intérieur et l'extérieur de l'appareil et autoriser ainsi la montée en pression de l'appareil.

La présente invention concerne plus particulièrement un appareil de cuisson d'aliments sous pression comprenant une cuve et un couvercle destiné à former avec ladite cuve une enceinte de cuisson, ledit couvercle comprenant une paroi supérieure présentant un contour périphérique sensiblement circulaire ou ovale à partir duquel s'étend une jupe annulaire, ledit appareil comprenant également un joint d'étanchéité interposé entre le couvercle et la cuve pour permettre la montée en pression de l'enceinte de cuisson, ledit joint d'étanchéité comportant un talon annulaire périphérique ainsi qu'une première lèvre flexible qui s'étend à partir dudit talon vers l'intérieur de l'appareil, selon une direction d'extension majoritairement radiale centripète, entre une racine solidaire du talon et une portion extrémale libre en contact étanche avec ladite paroi supérieure du couvercle.

La présente invention concerne également une méthode de dépressurisation sécuritaire d'un appareil de cuisson d'aliments sous pression comprenant une cuve et un couvercle destiné à former avec ladite cuve une enceinte de cuisson, ledit couvercle comprenant une paroi supérieure présentant un contour périphérique sensiblement circulaire ou ovale, ledit appareil comprenant également un joint d'étanchéité interposé entre le couvercle et la cuve pour permettre la montée en pression de l'enceinte de cuisson, ledit joint d'étanchéité comportant un talon annulaire périphérique ainsi qu'une première lèvre flexible qui s'étend à partir dudit talon vers l'intérieur de l'appareil, selon une direction d'extension majoritairement radiale centripète, entre une racine solidaire du talon et une portion extrémale libre en contact étanche avec ladite paroi supérieure du couvercle.

Il est déjà connu d'avoir recours à des joints d'étanchéité, par exemple en matériaux élastomères, qui sont interposés et compressés entre la cuve et le couvercle des autocuiseurs pour assurer, en particulier grâce à leur souplesse et leur aptitude à la compression, l'étanchéité de l'appareil en fonctionnement.

Les joints utilisés présentent des profils variables qui sont adaptés aux différents types d'appareils de cuisson sous pression et peuvent être qualifiés de joints de type corde ou encore de joint à lèvres.

Il est également connu d'utiliser de tels joints en tant que dispositifs de sécurité additionnels autorisant la chute de pression au sein de l'appareil par fuite de vapeur hors de l'enceinte de cuisson. Il s'avère en effet que les dispositifs classiques et spécifiquement dédiés de sécurité équipant habituellement les appareils de cuisson sous pression, comme par exemple les soupapes de sécurité, peuvent être déficients pour de multiples raisons (vieillissement, encrassement, défaut d'entretien suffisant, colmatage, blocage, obstruction par des aliments ou autre dysfonctionnement accidentel...).

Dans de telles situations, l'enceinte de cuisson peut être amenée à monter en pression en cours de fonctionnement sans que les dispositifs classiques de sécurité puissent jouer leur rôle en permettant la dépressurisation automatique de l'appareil dès qu'un incident de ce type se produit.

Dans de tels cas, il est alors déjà connu d'utiliser le joint d'étanchéité de l'appareil de cuisson sous pression en tant que moyen de sécurité additionnel en utilisant les propriétés de déformation naturelle du joint sous l'effet de la surpression régnant dans l'enceinte, laquelle surpression va déplacer le joint hors sa position d'étanchéité pour permettre un échappement de vapeur conduisant à la dépressurisation de l'enceinte.

Parmi les appareils de cuisson sous pression qui utilisent un tel mécanisme de fuite de vapeur localisée par déplacement du joint pour assurer une fonction sécuritaire additionnelle, on connaît des systèmes mettant en oeuvre une déformation radiale du joint à travers une fenêtre ménagée dans le bord tombant du couvercle.

On connaît ainsi plus précisément un autocuiseur à baïonnette équipé d'un joint qui comporte un talon à partir duquel s'étendent une lèvre supérieure en contact étanche avec le couvercle et une lèvre inférieure en contact étanche avec le bord supérieur de la cuve, le talon étant quant à lui disposé en regard du bord tombant du couvercle. Cet appareil comprend également une fenêtre ménagée localement à travers le bord tombant du couvercle. En cas de surpression anormale, le talon du joint va subir localement un déplacement radial vers l'extérieur à travers la fenêtre, ce qui va entraîner localement le déplacement radial vers l'extérieur de la lèvre inférieure jusqu'à ce que cette dernière ne soit plus localement en contact étanche avec le bord supérieur de la cuve. Cette rupture localisée du contact étanche entre la cuve et la lèvre inférieure entraîne une mise en communication de l'intérieur de l'enceinte avec l'extérieur, qui permet la dépressurisation de l'enceinte de cuisson.

Un tel dispositif de sécurité additionnelle à fenêtre donne globalement satisfaction, puisqu'il permet d'assurer l'évacuation de l'excès de pression.

Il n'en présente pas moins des inconvénients sérieux.

Ainsi, un premier inconvénient concerne l'absence de maîtrise du déplacement localisé radial centrifuge du joint à travers la fenêtre ménagée dans le bord tombant du couvercle. La résolution de ce problème est particulièrement complexe, dans la mesure où elle dépend en particulier de la géométrie et du positionnement de la fenêtre, eux-mêmes contraints par les exigences de tenue mécanique du couvercle (qui empêchent de dimensionner et positionner de façon totalement libre la fenêtre). Cette difficulté de déplacement du joint à travers la fenêtre est susceptible en pratique d'entraîner un phénomène d'échappement de vapeur violent, susceptible d'éteindre la flamme de la plaque de cuisson (s'il s'agit d'une plaque au gaz par exemple) et/ou de déplacer l'autocuiseur par un effet de réaction, avec tous les risques que cela engendre (fuite de gaz, renversement ou chute de l'autocuiseur...).

On constate en outre que cette conception connue induit une dispersion importante en ce qui concerne la valeur de pression à laquelle la sécurité additionnelle (c'est-à-dire la rupture locale d'étanchéité entre le joint et la cuve) se déclenche.

Cette dispersion importante est due en particulier au grand nombre de paramètres qui interviennent, comme en particulier et de manière non limitative :
- la géométrie des composants (forme du bord supérieur de cuve, géométrie du couvercle et de la fenêtre qui est pratiquée dans son bord tombant, forme et épaisseur du joint, conception du système de verrouillage...) ;
- les caractéristiques des matériaux à partir desquels sont fabriqués les composants (en particulier dureté des élastomères employés pour la fabrication du joint, caractéristiques mécaniques, et en particulier limite élastique, des matériaux métalliques employés pour la fabrication de la cuve et du couvercle...).

Ce grand nombre de paramètres, dont les influences et les interactions sont mal ou insuffisamment connues et maîtrisées, rend impossible en pratique de transposer à l'identique un tel système de sécurité additionnelle à fenêtre d'un modèle d'autocuiseur à un autre modèle d'autocuiseur de conception et/ou de fabrication différente, même si la différence est très légère. Par exemple la façon dont se produit la fuite et la valeur du seuil de pression de déclenchement de cette dernière peuvent être influencées par la nature du matériau (aluminium ou acier inoxydable) de réalisation de la cuve. Cette impossibilité de transposition d'un modèle à l'autre constitue bien entendu un inconvénient important sur le plan industriel.

Enfin, la maîtrise insuffisante du déclenchement de la sécurité à la surpression au niveau du joint est susceptible d'engendrer des problèmes de sécurité et de confort d'utilisation, car il peut y avoir chevauchement des plages de pression de déclenchement des différents dispositifs impliqués (soupape de sécurité à la surpression et dispositif additionnel de sécurité par déplacement localisé du joint), ce qui peut perturber la chronologie de déclenchement des dispositifs de sécurité concernés et provoquer de ce fait des désagréments importants pour les utilisateurs si les dispositifs de sécurité en question interviennent de façon anarchique.

Le document FR-2 782 257 divulgue un autocuiseur équipé d'un joint de sécurité qui comporte une encoche externe à sa périphérie et d'un couvercle pourvu d'un trou de fluage ménagé dans sa face supérieure.

Les objets assignés à la présente invention visent par conséquent à remédier aux différents inconvénients énumérés précédemment et à proposer un nouvel appareil de cuisson d'aliments sous pression, ainsi qu'une nouvelle méthode de dépressurisation sécuritaire d'un appareil de cuisson d'aliments sous pression, qui permettent, tout en assurant une excellente sécurité de fonctionnement en cas de surpression accidentelle, un fonctionnement particulièrement fiable, robuste et maîtrisé de l'appareil dans ces conditions particulières de surpression, permettant notamment d'éviter tout phénomène violent et de limiter la dispersion de la valeur de pression de déclenchement de la dépressurisation sécuritaire.

Un autre objet de l'invention vise à proposer un nouvel appareil de cuisson sous pression, ainsi qu'une nouvelle méthode de dépressurisation sécuritaire d'un appareil de cuisson d'aliments sous pression, qui assurent de manière particulièrement efficace la dépressurisation de l'appareil en cas de surpression accidentelle tout en préservant la résistance mécanique du couvercle.

Un autre objet de l'invention vise à proposer un nouvel appareil de cuisson d'aliments sous pression ainsi qu'une nouvelle méthode de dépressurisation sécuritaire d'un appareil de cuisson d'aliments sous pression, qui reposent sur la mise en oeuvre d'un joint d'étanchéité dont la conception est extrêmement simple et ne nécessite aucune précaution ni compétence particulière pour son installation dans l'appareil.

Un autre objet de l'invention vise à proposer un nouvel appareil de cuisson d'aliments sous pression ainsi qu'une nouvelle méthode de dépressurisation sécuritaire d'un appareil de cuisson d'aliments sous pression, qui permettent une dépressurisation particulièrement rapide de l'appareil de cuisson d'aliments sous pression en cas de surpression accidentelle.

Un autre objet de l'invention vise à proposer un nouvel appareil de cuisson d'aliments sous pression et une nouvelle méthode de dépressurisation sécuritaire d'un appareil de cuisson d'aliments sous pression, qui garantissent le déclenchement de la dépressurisation de l'appareil à un seuil de pression précis.

Un autre objet de l'invention vise à proposer un nouvel appareil de cuisson d'aliments sous pression, ainsi qu'une nouvelle méthode de dépressurisation sécuritaire d'un appareil de cuisson d'aliments sous pression, qui reposent sur la mise en oeuvre de moyens extrêmement simples et bon marché.

Un autre objet de l'invention vise à proposer un nouvel appareil de cuisson d'aliments sous pression et une nouvelle méthode de dépressurisation sécuritaire d'un appareil de cuisson d'aliments sous pression, qui limitent le risque de brûlure de l'utilisateur par un jet de vapeur lorsque la dépressurisation se déclenche en réponse à une surpression accidentelle.

Un autre objet de l'invention vise à proposer un nouvel appareil de cuisson d'aliments sous pression ainsi qu'une nouvelle méthode de dépressurisation sécuritaire d'un appareil de cuisson d'aliments sous pression, qui reposent sur une conception universelle compatible avec tout type d'appareil de cuisson sous pression.

Les objets assignés à l'invention sont atteints à l'aide d'un appareil de cuisson d'aliments sous pression comprenant une cuve et un couvercle destiné à former avec ladite cuve une enceinte de cuisson, ledit couvercle comprenant une paroi supérieure présentant un contour périphérique sensiblement circulaire ou ovale à partir duquel s'étend une jupe annulaire, ledit appareil comprenant également un joint d'étanchéité interposé entre le couvercle et la cuve pour permettre la montée en pression de l'enceinte de cuisson, ledit joint d'étanchéité comportant un talon annulaire périphérique ainsi qu'une première lèvre flexible qui s'étend à partir dudit talon vers l'intérieur de l'appareil, selon une direction d'extension majoritairement radiale centripète, entre une racine solidaire du talon et une portion extrémale libre en contact étanche avec ladite paroi supérieure du couvercle, ledit appareil étant caractérisé en ce qu'il comprend une ouverture de fuite ménagée à travers ladite paroi supérieure, au-dessus du joint d'étanchéité, de façon à être obturée hermétiquement par ce dernier tant que la pression régnant au sein de l'enceinte n'excède pas un seuil de sécurité, la jupe annulaire formant une butée d'arrêt pour le talon empêchant tout déplacement radial centrifuge du joint au droit de l'ouverture de fuite, ladite première lèvre présentant une flexibilité adaptée pour que la portion extrémale libre soit localement repoussée à travers l'ouverture de fuite dès que la pression régnant dans l'enceinte excède ledit seuil de sécurité, de façon à faire ainsi communiquer par l'ouverture de fuite l'intérieur de l'enceinte avec l'extérieur pour faire chuter la pression dans l'enceinte.

Les objets assignés à l'invention sont également atteints à l'aide d'une méthode de dépressurisation sécuritaire d'un appareil de cuisson d'aliments sous pression comprenant une cuve et un couvercle destiné à former avec ladite cuve une enceinte de cuisson, ledit couvercle comprenant une paroi supérieure présentant un contour périphérique sensiblement circulaire ou ovale, ledit appareil comprenant également un joint d'étanchéité interposé entre le couvercle et la cuve pour permettre la montée en pression de l'enceinte de cuisson, ledit joint d'étanchéité comportant un talon annulaire périphérique ainsi qu'une première lèvre flexible qui s'étend à partir dudit talon vers l'intérieur de l'appareil, selon une direction d'extension majoritairement radiale centripète, entre une racine solidaire du talon et une portion extrémale libre en contact étanche avec ladite paroi supérieure du couvercle, ladite méthode étant caractérisée en ce que l'appareil de cuisson d'aliments sous pression comprend une ouverture de fuite ménagée à travers ladite paroi supérieure, au-dessus du joint d'étanchéité, de façon à être obturée hermétiquement par ce dernier tant que la pression régnant au sein de l'enceinte n'excède pas un seuil de sécurité, ladite méthode comportant, lorsque la pression excède le seuil de sécurité, une étape de déformation de la première lèvre au cours de laquelle ladite première lèvre subit, sous l'effet de la pression régnant dans l'enceinte, une déflexion suffisante pour que la portion extrémale libre soit localement repoussée à travers l'ouverture de fuite, de façon à faire ainsi communiquer par l'ouverture de fuite l'intérieur de l'enceinte avec l'extérieur pour faire chuter la pression dans l'enceinte, le talon étant maintenu de façon à empêcher tout déplacement radial centrifuge du joint au droit de l'ouverture de fuite, sous l'effet de la pression régnant dans l'enceinte.

D'autres objets et avantages de l'invention apparaîtront et ressortiront plus en détails à la lecture de la description qui suit, en référence aux dessins annexés, donnés à titre purement illustratif et non limitatif, parmi lesquels :
- La figure 1 illustre, selon une vue schématique en perspective, un appareil de cuisson d'aliments sous pression conforme à l'invention, qui se trouve dans une configuration de pré-verrouillage du couvercle relativement à la cuve.
- La figure 2 illustre l'appareil de cuisson d'aliments de la figure 1 avec le couvercle verrouillé relativement à la cuve.
- La figure 3 illustre de façon séparée et selon une vue schématique en perspective de dessus, un sous-ensemble de cuve qui fait partie de l'appareil de cuisson sous pression des figures 1 et 2.
- La figure 4 illustre, de façon séparée selon une vue schématique en perspective de dessous, un sous-ensemble de couvercle qui fait partie de l'appareil de cuisson sous pression des figures 1 et 2, et qui est destiné à être rapporté sur la cuve de la figure 3 pour former une enceinte de cuisson sous pression.
- La figure 5 illustre un couvercle métallique qui fait partie du sous-ensemble de couvercle de la figure 4.
- La figure 6 est une vue de dessus d'un détail de la figure 1.
- La figure 7 est une vue de dessus d'un détail de la figure 2.
- Les figures 8 à 10 illustrent, de façon schématique et chronologique, selon une vue en coupe transversale, les déplacement et déformation subis localement par le joint d'étanchéité équipant l'autocuiseur des figures précédentes lorsque la pression régnant au sein de l'enceinte de cuisson excède un seuil de sécurité prédéterminé, qui conduit le joint à passer d'une configuration d'étanchéité (figure 8) à une configuration locale de fuite (figure 10) via une configuration intermédiaire (figure 9).
- La figure 11 est un détail agrandi de la figure 5.
- La figure 12 est une vue de dessus d'un détail de la figure 11, qui inclut l'ouverture de fuite ménagée dans le couvercle.
- Les figures 13 et 14 illustrent respectivement deux variantes alternatives de réalisation de l'ouverture de fuite.
- La figure 15 illustre, selon une vue schématique en coupe, une variante alternative de réalisation du joint équipant l'appareil des figures précédentes, et qui se caractérise par un amincissement local des lèvres supérieure et inférieure du joint.
- La figure 16 illustre la section transversale d'une variante de réalisation du joint équipant l'appareil des figures précédentes.

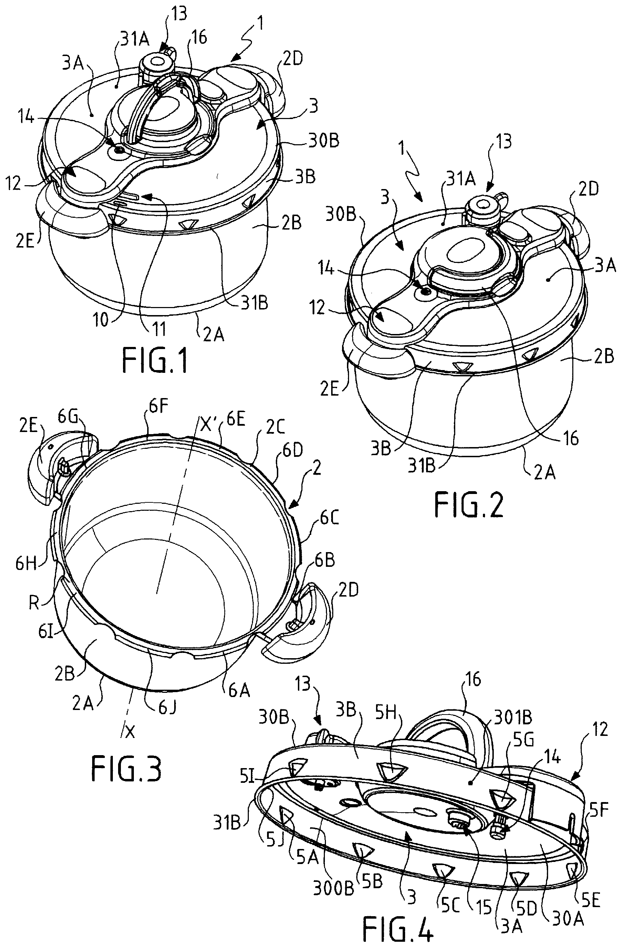

Comme illustré aux figures, l'invention concerne un appareil de cuisson 1 d'aliments sous pression, destiné à assurer la cuisson de différents aliments à un niveau de pression supérieur à la pression atmosphérique, en présence de vapeur, et par exemple de vapeur d'eau. Ladite vapeur est générée par le chauffage, au sein de l'appareil 1 et en présence des aliments, d'un liquide de cuisson, par exemple un liquide aqueux. L'appareil 1 selon l'invention est préférentiellement destiné à un usage domestique, étant entendu toutefois que l'invention peut également concerner des appareils professionnels ou semi-professionnels. L'appareil 1 conforme à l'invention est conçu pour monter en pression exclusivement sous l'effet d'une source de chauffe (embarquée ou externe), sans apport de pression externe. L'appareil 1 de cuisson d'aliments sous pression constitue donc un autocuiseur, destiné préférentiellement à être disposé sur une plaque de cuisson indépendante pour en chauffer le contenu. L'appareil de cuisson 1 conforme à l'invention comprend au moins une cuve 2 formant récipient de cuisson, destiné à accueillir les aliments à cuire et présentant en l'espèce sensiblement une symétrie de révolution selon un axe vertical central X-X', lequel s'étend selon une direction qui s'apparente à la direction verticale lorsque l'appareil 1 est en fonctionnement normal, c'est-à-dire repose sur un plan horizontal. Il est cependant tout à fait envisageable, selon une variante alternative (non illustrée) que la cuve présente non pas un contour circulaire comme illustré aux figures mais un contour ovale, sans pour autant que l'on sorte du cadre de l'invention. La cuve 2 est de manière classique fabriquée à partir d'un matériau métallique tel que l'acier inoxydable ou l'aluminium. La cuve 2 comprend un fond 2A, qui est par exemple un fond thermo-conducteur multicouches. La cuve 2 comprend également une paroi latérale annulaire 2B qui s'élève entre ledit fond 2A et un bord supérieur libre 2C, qui est en l'espèce de forme circulaire (mais peut alternativement présenter plutôt une forme ovale), et qui délimite une ouverture d'accès à l'intérieur de la cuve 2. La conformation de ce bord supérieur libre 2C sera décrite plus en détails dans ce qui suit, en relation avec les moyens de verrouillage de l'appareil 1. Comme visible notamment sur la figure 3, le bord supérieur libre 2C de la cuve 2, qui forme la partie terminale de la paroi latérale 2B, s'étend par exemple radialement vers l'extérieur de la cuve 2 pour former au moins une surface annulaire qui définit une zone de repos R, contre et sur laquelle vient reposer un joint d'étanchéité 4 décrit plus en détails ci-après.

Avantageusement, et comme illustré aux figures, l'appareil de cuisson 1 comprend au moins une poignée de cuve 2D qui est fixée à ladite cuve 2, de façon à faire saillie extérieurement de cette dernière. Dans le mode de réalisation illustré aux figures, l'appareil de cuisson 1 comprend deux poignées identiques 2D, 2E fixées sur la paroi latérale 2B de la cuve 2 de façon diamétralement opposée par rapport à l'axe central X-X'.

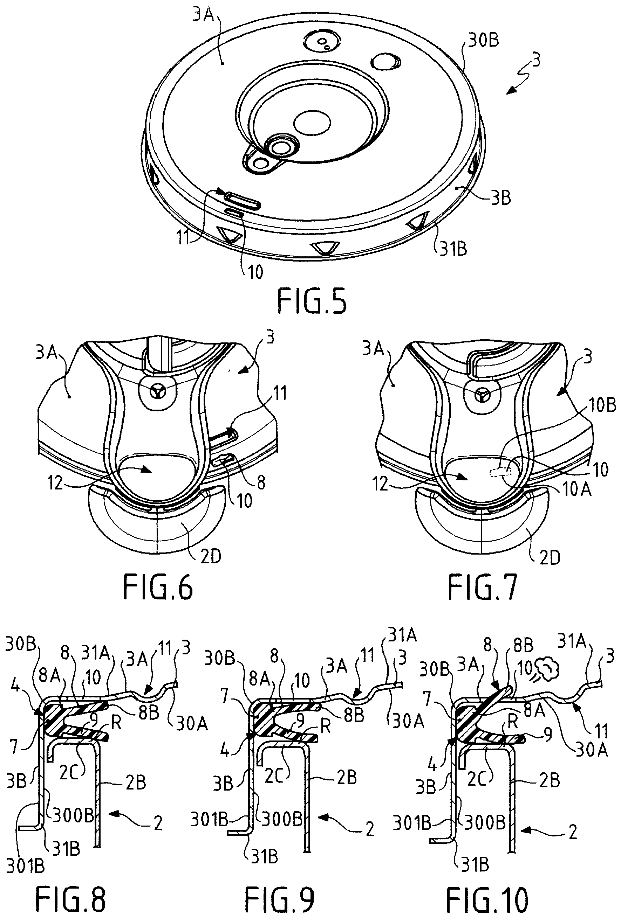

L'appareil 1 conforme à l'invention comprend également un couvercle 3 destiné à former avec ladite cuve 2 une enceinte de cuisson. Le couvercle 3 est de manière classique fabriqué à partir d'un matériau métallique tel que l'acier inoxydable ou l'aluminium. Il présente avantageusement une forme conjuguée à celle de la cuve 2, afin de pouvoir venir s'emboîter dans ou sur cette dernière, comme illustré aux figures 1 et 2 par exemple. Comme illustré aux figures, le couvercle 3 comprend une paroi supérieure 3A qui forme un élément de couverture dont la forme et les dimensions sont sensiblement conjuguées à celles de l'ouverture d'accès délimité par le bord supérieur libre 2C de la paroi latérale annulaire 2B de la cuve 2. Ladite paroi supérieure 3A présente ainsi un contour périphérique sensiblement circulaire (lorsque le bord supérieur libre 2C présente lui-même un contour sensiblement circulaire) ou ovale (dans le cas d'une cuve 2 dont le bord supérieur libre 2C présente lui-même un contour ovale). Dans le mode de réalisation illustré aux figures, le couvercle 3 comprend également une jupe annulaire 3B qui s'étend à partir dudit contour périphérique de la paroi supérieure 3A. Ladite jupe annulaire 3B présente avantageusement, comme illustré aux figures, une forme sensiblement cylindrique ou tronconique et s'étend entre un premier bord circulaire ou ovale 30B solidaire de l'élément de couverture formé par la paroi supérieure 3A et un second bord circulaire libre 31B, lequel est par exemple lui-même prolongé par une collerette terminale. Comme illustré aux figures, l'élément de couverture discoïde formé par la paroi supérieure 3A s'étend globalement selon un plan moyen horizontal, c'est-à-dire en l'espèce parallèle au plan moyen d'extension du fond 2A de la cuve 2 lorsque le couvercle 3 est associé à la cuve 2 pour former l'enceinte de cuisson, tandis que la jupe annulaire 3B forme une ceinture qui s'étend sensiblement verticalement, c'est-à-dire parallèlement à l'axe central X-X', la collerette terminale précitée s'étendant quant à elle sensiblement horizontalement. Cela n'exclut bien entendu aucunement que la paroi supérieure 3A puisse être bombée ou incurvée localement, par exemple pour accueillir un mécanisme de commande, comme illustré à la figure 5. La paroi supérieure 3A présente avantageusement une face inférieure 30A, disposée en regard de l'intérieur de la cuve 2, et une face extérieure opposée 31A, tandis que la jupe annulaire 3B présente elle aussi une face intérieure 300B dirigée vers l'intérieur de l'appareil, c'est-à-dire vers l'axe central X-X', et une face extérieure opposée 301B. La face interne du couvercle 3 est donc dans ce cas formée par la face intérieure 30A de la paroi supérieure 3A et par la face intérieure 300B de la jupe annulaire 3B. Dans le mode de réalisation illustré aux figures, la jupe annulaire 3B est formée par un bord tombant qui s'étend du haut vers le bas à partir de la périphérie de la paroi supérieure 3A. Dans ce mode de réalisation, le couvercle 3 est destiné à venir coiffer de façon sensiblement ajustée le sommet de la cuve 2, de sorte que la jupe annulaire 3B ceinture par l'extérieur le sommet de la paroi latérale annulaire 2B et le bord supérieur libre 2C, tandis que la paroi supérieure 3A repose en appui sur le bord libre 2C, par l'intermédiaire d'un joint d'étanchéité 4 interposé entre la cuve 2 et le couvercle 3, et qui sera décrit plus en détail ci-après. Il est cependant parfaitement envisageable que la jupe annulaire 3B soit alternativement destinée à être insérée au sein de la cuve 2, de façon à être entouré par, et contenue dans, la cuve 2, sans pour autant que l'on sorte du cadre de l'invention. La cuve 2 et le couvercle 3 constituent ainsi des enveloppes respectives complémentaires, réalisées de préférence en métal (par exemple en acier inoxydable ou en aluminium), qui une fois associées forment une enveloppe métallique résultante délimitant un volume fermé au sein duquel les aliments sont destinés à cuire sous pression de vapeur.

Afin d'empêcher la séparation du couvercle 3 de la cuve 2 sous l'effet de la montée en pression, l'appareil de cuisson 1 selon l'invention comprend classiquement un système de verrouillage/déverrouillage du couvercle 3 relativement la cuve 2, permettant à l'utilisateur de verrouiller le couvercle 3 relativement à la cuve 2 pour assurer la cuisson des aliments sous pression à l'intérieur de l'enceinte ou pour déverrouiller l'appareil 1 et avoir ainsi accès à l'intérieur de la cuve 2. Le système de verrouillage/déverrouillage pourra être formé par tout dispositif classique bien connu dans le domaine et être par exemple un système à baïonnette (conformément à l'exemple illustré aux figures) ou un système à mâchoire mobile (formé par exemple d'au moins une et de préférence de deux mâchoires de verrouillage montée mobiles radialement sur le couvercle) ou un système à segments mobiles (formé par des pattes radialement mobile dont l'extrémité est destinée à venir se loger dans une cavité ou un orifice ménagé dans la paroi de la cuve 2), ou tout autre système connu (par exemple à étrier).

Dans le mode de réalisation illustré aux figures, le système de verrouillage/déverrouillage à baïonnette est conçu pour assurer le verrouillage et le déverrouillage du couvercle 3 relativement à la cuve 2 par pivotement du couvercle 3 relativement à la cuve 2 selon ledit axe vertical central X-X', pour faire ainsi passer l'appareil 1 d'une configuration d'attente de verrouillage (illustrée à la figure 1), dans laquelle le couvercle 3 est rapporté sur la cuve 2 et repose librement sur cette dernière, à une configuration de verrouillage (illustrée à la figure 2) dans laquelle la cuve 2 et le couvercle 3 interagissent pour empêcher leur libre séparation, et inversement. Le système de verrouillage à baïonnette mis en oeuvre par le mode de réalisation préférentiel illustré aux figures comprend avantageusement des première et deuxième séries d'excroissances 5A-5J, 6A-6J qui sont solidaires respectivement du couvercle 3 et de la cuve 2 et qui sont conçus, afin d'assurer le verrouillage et le déverrouillage du couvercle 3 relativement la cuve 2, pour venir s'engager, respectivement se dégager, mutuellement par rotation du couvercle 3 relativement à la cuve 2 autour de l'axe vertical central X-X' selon une course angulaire prédéterminée. Comme cela est bien connu en tant que tel, les excroissances 5A-5J, 6A-6J de chacune desdites première et deuxième séries sont destinées à coopérer deux à deux, c'est-à-dire que chaque excroissance de l'une desdites séries est amenée, par rotation du couvercle 3 relativement la cuve 2, à passer sous une excroissance correspondante de l'autre série pour verrouiller le couvercle 3 relativement à la cuve 2. Dans le mode de réalisation illustré aux figures, les excroissances 5A-5J de la première série, solidaire du couvercle 3, font saillie radialement vers l'intérieur du couvercle 3, et sont avantageusement formées par des déformations locales de la jupe annulaire 3B, obtenues par exemple par emboutissage. De préférence, conformément au mode de réalisation illustré aux figures, chacune desdites excroissances 5A-5J de couvercle est formé par un crevé, c'est-à-dire que la déformation radiale localisée de la matière formant l'excroissance s'accompagne de la présence d'une ouverture ménagée à travers l'enveloppe du couvercle 3. L'ouverture en question est avantageusement adjacente à l'excroissance 5A-5J correspondante, et peut être obtenue directement lors de l'emboutissage, par déchirure localisée et contrôlée de la matière formant l'enveloppe sous l'effet de l'opération d'emboutissage, ou au contraire être réalisée préalablement ou postérieurement à l'opération de déformation (par exemple au moyen d'un faisceau laser de découpe ou de tout autre outil de découpe). Le recours à un crevé s'avère particulièrement avantageux car il permet d'obtenir un élément en volume particulièrement rigide et résistant à la flexion, extrêmement simple, rapide et bon marché à fabriquer.

Les excroissances 6A-6J de la deuxième série, solidaire de la cuve 2, font quant à elle avantageusement saillie radialement à partir de la paroi latérale 2B de la cuve 2, vers l'extérieur de cette dernière. L'invention n'est toutefois pas limitée à une configuration particulière des rampes de verrouillage du système à baïonnette, l'essentiel étant que les excroissances de couvercle 5A-5J et de cuve 6A-6J, formant respectivement des rampes de couvercle et de cuve, coopèrent ensemble pour réaliser une liaison mécanique entre la cuve 2 et le couvercle 3 capable de résister à la pression interne régnant dans l'enceinte de cuisson.

De préférence, les excroissances 6A-6J de cuve sont formées par le rebord supérieur de la cuve 2, rebord qui déborde vers l'extérieur de façon à former des rampes de cuve séparées par des encoches (figure 3). Ainsi, lorsque le couvercle 3 vient coiffer la cuve 2 dans la position de pré-verrouillage illustrée à la figure 1, les excroissances 5A-5J de couvercle peuvent passer par les encoches pour se retrouver plus bas que le rebord annulaire et donc les rampes de cuve. L'appareil 1 se trouve alors dans sa configuration de pré-verrouillage (ou configuration d'attente de verrouillage), à partir de laquelle la configuration de verrouillage peut être atteinte en faisant simplement tourner le couvercle 3 relativement la cuve 2 selon l'axe vertical X-X', ce qui a pour effet de décaler angulairement les excroissances 5A-5J du couvercle 3 et les encoches ménagées dans le rebord annulaire de la cuve 2, de sorte que les excroissances 5A-5J de couvercle passent sous les excroissances 6A-6J de cuve réalisant ainsi un verrouillage de type « *à baïonnette* ».

L'appareil 1 de cuisson d'aliments sous pression conforme à l'invention comprend avantageusement un moyen de régulation de pression 13, comme par exemple une soupape, montée de préférence sur le couvercle 3, de façon par exemple à être portée directement par ledit couvercle 3 et agencée pour maintenir la pression régnant dans l'enceinte de cuisson à une valeur prédéterminée sensiblement constante, dite pression de fonctionnement, laquelle excède la pression atmosphérique d'une valeur qui est comprise par exemple entre sensiblement 10 et 120 kPa, de préférence de l'ordre de 100 kPa.

L'appareil 1 de cuisson d'aliments sous pression comporte avantageusement d'autres organes de fonctionnement, comme par exemple un moyen de sécurité à l'ouverture 14 (du genre doigt de sécurité sensible à la pression) ainsi qu'une une soupape de sécurité à la surpression 15 conçue pour dépressuriser l'appareil 1 dès que la pression régnant dans l'enceinte excède une valeur de sécurité prédéterminée.

Comme évoqué précédemment, l'appareil 1 comprend également un joint d'étanchéité 4 interposé entre le couvercle 3 et la cuve 2 pour permettre la montée en pression de l'enceinte de cuisson. Le joint d'étanchéité 4 permet ainsi d'empêcher tout flux incontrôlé de vapeur et/ou d'air entre l'intérieur de l'enceinte et l'extérieur. À cette fin, le joint d'étanchéité 4 est avantageusement réalisé en un matériau élastomère et présente une souplesse naturelle de manière à pouvoir être comprimé entre le couvercle 3 et la cuve 2 pour réaliser l'étanchéité nécessaire. Le joint d'étanchéité 4 présente avantageusement une forme sensiblement annulaire conjuguée à celle du contour périphérique de la paroi supérieure 3A.

Plus précisément, le joint d'étanchéité 4 comporte un talon annulaire périphérique 7 qui est avantageusement logé contre la face intérieure 300B de la jupe annulaire 3B. Le talon présente préférentiellement une section transversale à quatre côtés, avec un côté extérieur destiné à venir en appui contre la face intérieure 300B de la jupe annulaire 3B, et un côté intérieur disposé en regard de l'intérieur de l'appareil, lesdits côtés extérieurs et intérieurs étant reliés par un côté supérieur et un côté inférieur qui s'étendent par exemple sensiblement parallèlement à un plan horizontal. Ledit côté supérieur est préférentiellement relié au côté extérieur par un arrondi de transition qui est sensiblement conjugué à l'arrondi de transition réalisé entre la paroi supérieure 3A et la jupe annulaire 3B. De cette façon, le talon annulaire périphérique 7 peut, sous l'effet de la montée en pression au sein de l'enceinte, venir se caler de manière ajustée dans le coin formé à la jonction de la paroi supérieure 3A et de la jupe annulaire 3B (figure 9). Avantageusement, le talon 7 présente une section transversale (visible aux figures 8 à 10 et 15) sensiblement constante sur tout le périmètre du joint d'étanchéité 4. En d'autres termes, la forme de la section transversale ne varie sensiblement pas sur toute la longueur du joint, ce qui signifie en particulier que le talon 7 est dépourvu d'irrégularités ou discontinuités géométriques, du genre encoches, qui pourraient localement modifier son comportement mécanique. Cette disposition technique permet de simplifier la fabrication du joint 4.

Comme illustré aux figures, le joint d'étanchéité 4 comporte également une première lèvre 8 flexible qui s'étend à partir du talon 7, et plus précisément à partir du côté interne dudit talon 7 tourné vers l'intérieur de l'appareil 1, selon une direction d'extension majoritairement radiale centripète, entre une racine 8A solidaire du talon 7, et raccordé à ce dernier de préférence au niveau de son côté intérieur comme illustré aux figures, et une portion extrêmale libre 8B en contact étanche avec ladite paroi supérieure 3A du couvercle 3, et plus précisément avec la face interne 30A de ladite paroi supérieure 3A. La première lèvre 8 forme ainsi une jupe souple qui s'étend à partir du talon 7 en direction de l'axe central X-X'. De préférence, la première lèvre 8 s'étend, à partir du talon 7, selon une incidence oblique vers l'intérieur de l'appareil 1 et vers le haut, de façon à être sollicité en flexion par le poids du couvercle 3 lorsque ce dernier est rapporté sur la cuve 2 (figure 1). La première lèvre 8 vient en appui, au niveau au moins de sa portion extrêmale libre 8B, contre la face intérieure 30A de la paroi supérieure 3A, selon une zone de contact annulaire étanche. De préférence, la première lèvre 8 présente une section transversale (illustrée aux figures 8 à 10 et 15) sensiblement constante sur tout le périmètre du joint d'étanchéité 4. Cela signifie que la première lèvre 8 ne présente pas, elle non plus, d'irrégularités ou discontinuités géométriques (encoche, ouverture...) susceptibles de modifier localement son comportement mécanique. Cette absence de discontinuité est source de simplicité de fabrication et d'utilisation du joint 4, et contribue également à sa fiabilité.

Dans le mode de réalisation préférentiel illustré aux figures, le joint d'étanchéité 4 présente avantageusement une forme de révolution autour de l'axe X-X', ce qui le rend particulièrement facile et bon marché à fabriquer.

Avantageusement, le joint d'étanchéité 4 comporte une seconde lèvre 9, qui est de préférence elle aussi flexible, et qui s'étend avantageusement elle aussi à partir du talon 7 vers l'intérieur de l'appareil 1, ladite seconde lèvre 9 étant destinée à venir en contact étanche avec la cuve 2. Comme illustré aux figures, la seconde lèvre 9 s'étend avantageusement selon une direction d'extension majoritairement radiale centripète, entre une racine 9A solidaire du talon 7 et une extrémité libre 9B, ladite seconde lèvre 9 définissant une surface d'étanchéité qui vient en appui étanche contre la cuve 2, de préférence contre la surface de repos R, comme illustré aux figures 8 à 10 et 15. Avantageusement, ladite seconde lèvre 9 s'étend, à partir du talon 7, selon une incidence oblique vers l'intérieur de l'appareil 1 et vers le bas, de telle sorte que lesdites première et seconde lèvres 8, 9 s'étendent, à partir du talon 7, de façon sensiblement divergente, selon un profil sensiblement en « V ».

Le joint d'étanchéité 4 est avantageusement attaché, de manière amovible, au couvercle 3. À cette fin, le talon 7 du joint d'étanchéité 4 repose sur les protubérances 5A-5J formant les rampes du couvercle (cf. figure 4), de sorte que ces dernières assument une double fonction de maintien du joint d'étanchéité 4 (lorsque le couvercle 3 est séparé de la cuve 2) et de verrouillage (par interaction avec les rampes de cuve 6A-6J). Lorsque le couvercle 3 est rapporté sur la cuve 2, le joint d'étanchéité 4 se retrouve interposé entre la surface de repos R et la face intérieure 30A de la paroi supérieure 3A du couvercle 3. Sous l'effet du poids du couvercle 3, les première et seconde lèvres 8, 9 sont pressées l'une en direction de l'autre ce qui permet ainsi d'assurer une étanchéité entre la cuve 2 le couvercle 3.

Avantageusement, le joint d'étanchéité 4 est symétrique relativement à un plan horizontal médian P qui passe entre les première et deuxième lèvres 8, 9. Grâce à cette caractéristique, le joint peut être disposé sans aucune précaution particulière (l'utilisateur n'a pas à se soucier d'un quelconque sens de positionnement du joint 4) entre le couvercle 3 la cuve 2, ce qui facilite l'utilisation de l'appareil 1 et minimise le risque d'erreur d'utilisation ou de défaut de fonctionnement.

L'invention n'est toutefois pas limitée un joint d'étanchéité présentant deux lèvres, et il est par exemple tout à fait envisageable que le joint d'étanchéité 4 ne comporte qu'une seule première lèvre 8 et que le talon 7 soit configuré pour venir lui-même en appui contre la surface de repos R pour assurer l'étanchéité avec la cuve 2, en lieu et place de la seconde lèvre 9. Le recours à deux lèvres 8, 9 est toutefois préféré car il permet, comme évoqué précédemment, de réaliser un joint symétrique par rapport à un plan horizontal médian avec tous les avantages qui en découlent.

L'appareil 1 comprend également une ouverture de fuite 10 ménagée à travers la paroi supérieure 3A, au-dessus du joint d'étanchéité 4, de façon à être obturée hermétiquement par ce dernier tant que la pression régnant au sein de l'enceinte de cuisson n'excède pas un seuil de sécurité, qui est de préférence supérieur à la valeur prédéterminée de sécurité à laquelle se déclenche la soupape de sécurité 15. L'ouverture de fuite 10 traverse ainsi la paroi supérieure 3A selon un axe de perforation sensiblement vertical, c'est-à-dire parallèle à l'axe central X-X'. L'ouverture de fuite 10 est ménagée en une zone de la paroi supérieure 3A qui est suffisamment proche de la périphérie de cette dernière pour que l'ouverture de fuite 10 soit masquée, par l'intérieur, par le joint d'étanchéité 4, et de préférence par la première lèvre 8, comme illustré aux figures 8 à 10 et 15. Ainsi, la face externe de la première lèvre 8 vient localement, et par en dessous, au droit de la fenêtre formée par l'ouverture de fuite 10 qui est elle-même ménagée localement à travers la paroi supérieure 3A, de préférence vers la périphérie de cette dernière. Dans le mode de réalisation illustré aux figures, l'ouverture de fuite 10 s'étend, selon la direction radiale (c'est-à-dire la direction qui passe par l'axe central X-X'), entre un bord extérieur 10A et un bord intérieur 10B situé entre le bord extérieur 10A et l'axe central X-X' selon la direction radiale. De préférence, le bord intérieur 10B se trouve, tant que la pression au sein de l'enceinte n'excède pas le seuil de sécurité, au droit d'une zone de la première lèvre 8 qui est située entre la racine 8A et la portion extrêmale 8B, de préférence à proximité immédiate de ladite portion extrêmale libre 8B. Cette dernière vient donc avantageusement en appui étanche contre la face interne 30A de la paroi supérieure 3A au voisinage du bord intérieur 10B de l'ouverture de fuite 10. Le bord extérieur 10A de l'ouverture de fuite 10 est disposé quant à lui au droit d'une zone de la première lèvre 8 qui est située entre la racine 8A et la portion extrêmale libre 8B, de préférence à proximité de la racine 8A, de sorte que le talon 7 ne se trouve avantageusement pas au droit de l'ouverture de fuite 10 et est au contraire entièrement recouvert par la paroi supérieure 3A. Dans les exemples illustrés aux figures, l'appareil 1 comporte une seule et unique ouverture de fuite 10. Il est cependant parfaitement envisageable de recourir à plusieurs ouvertures de fuite ménagées en différents endroits de la paroi supérieure 3A.

Comme illustré aux figures, la jupe annulaire 3B forme une butée d'arrêt pour le talon 7, empêchant tout déplacement radial centrifuge du joint 4 au droit de l'ouverture de fuite 10. En d'autres termes la face externe du talon 7 est disposée en permanence contre la jupe annulaire 3B, de sorte que le talon 7 ne peut sensiblement pas subir, au moins au voisinage de l'ouverture de fuite 10, un quelconque déplacement radial vers l'extérieur (centrifuge). Cela signifie que lorsque, sous l'effet de la montée en pression au sein de l'enceinte, s'exerce sur le joint d'étanchéité 4 une poussée radiale centrifuge, le joint 4 est empêché, par la jupe annulaire 3B contre laquelle le talon 7 vient en appui, de se déplacer librement vers l'extérieur. Comme illustré aux figures, le talon 7 est avantageusement en butée contre la jupe annulaire 3B, au moins dans une région de cette dernière située au voisinage de l'ouverture de fuite 10 (ladite région s'inscrivant par exemple au moins en partie dans un plan radial qui passe également par ladite ouverture de fuite 10), et ce quel que soit le niveau de pression régnant dans l'enceinte, et en particulier même lorsque ledit niveau de pression est inférieur au seuil de sécurité.

Ainsi, le talon 7 ne peut sensiblement pas localement se déplacer vers l'extérieur, c'est-à-dire subir localement un déplacement radial centrifuge, même lorsque la pression excède le seuil de sécurité, puisqu'il est déjà sensiblement en appui contre la face interne de la jupe annulaire 3B.

Avantageusement et comme illustré aux figures, le contour extérieur du joint est sensiblement régulier et continu, la face externe du talon 7 étant en particulier dépourvue de toute encoche ou évidement local comme dans l'art antérieur, obligeant à doter le joint 4 de moyens d'indexation.

Avantageusement, la jupe annulaire 3B est quant à elle dépourvue de toute ouverture d'extrusion de joint ménagée dans le prolongement de l'ouverture de fuite 10 ou au voisinage de cette dernière. La jupe annulaire 3B empêche ainsi localement le joint d'étanchéité 4 de subir un déplacement global vers l'extérieur.

Grâce à cette caractéristique, l'invention ne souffre pas des différents inconvénients de l'art antérieur liés à la nécessité de faire passer localement le talon du joint à travers une fenêtre d'extrusion ménagée dans le bord tombant du couvercle. Le talon 7 est ici au contraire incapable de passer à travers la jupe annulaire 3B, du moins au voisinage et/ou dans le prolongement de l'ouverture de fuite 10. La première lèvre 8 présente toutefois une flexibilité adaptée, ou en d'autres termes une flexibilité suffisante, pour que la portion extrêmale libre 8B soit localement repoussé, sous l'effet de la force motrice exercée par la pression régnant sein de l'enceinte, à travers l'ouverture de fuite 10 dès que la pression régnant dans l'enceinte excède ledit seuil de sécurité, de façon à faire ainsi communiquer par l'ouverture de fuite 10 l'intérieur de l'enceinte avec l'extérieur pour faire chuter la pression dans l'enceinte.

Le seuil de sécurité correspond ainsi à une valeur prédéterminée de pression à partir de laquelle la force motrice exercée par la pression régnant au sein de l'enceinte sur la portion de la première lèvre 8 obturant l'ouverture de fuite 10 devient suffisante pour entraîner une déformation locale de la première lèvre 8 permettant à la portion extrêmale libre 8B de localement pénétrer à travers l'ouverture de fuite 10, voire même de traverser localement l'ouverture de fuite 10 afin de rompre localement l'étanchéité pour ainsi mettre en communication, via l'ouverture de fuite 10, l'intérieur de l'enceinte avec l'extérieur. La première lèvre 8 est donc suffisamment souple, et sa portion extrêmale libre 8B est disposée suffisamment à proximité de l'ouverture de fuite 10 (et en l'espèce du bord intérieur 10B de cette dernière) pour que lorsque le seuil de sécurité est dépassé, la portion extrêmale 8B glisse localement le long et contre la face intérieure 30A de la paroi supérieure 3A jusqu'à se retrouver localement au droit de l'ouverture de fuite 10 à travers laquelle elle est ensuite localement repoussée par la pression.

L'invention repose donc en particulier sur l'idée de jouer exclusivement sur la déformation locale d'une lèvre en regard d'une ouverture supérieure ménagée dans le couvercle, et non comme dans l'art antérieur sur un déplacement radial centrifuge du joint visant à décaler radialement une lèvre pour découvrir une ouverture de fuite.

Le joint d'étanchéité 4 est avantageusement réalisé en silicone, et présente par exemple une dureté Shore A comprise entre 50 et 80, de façon préférentielle entre 55 et 65.

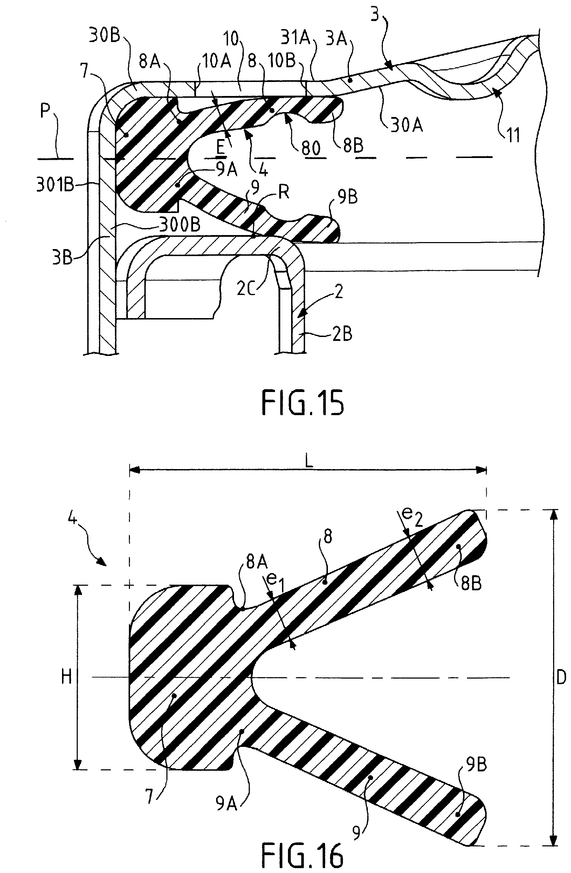

Le recours à un silicone dont la dureté est comprise dans la plage ci-avant, combiné avec une épaisseur appropriée de la première lèvre 8, comprise par exemple entre 1mm et 2,5mm, permet d'obtenir de façon optimale l'effet recherché de déformation localisé de la première lèvre 8 qui permet la fuite de vapeur par l'ouverture 10. Dans l'exemple de la figure 16, le joint 4 présente par exemple les dimensions suivantes :
- une hauteur H de talon comprise entre sensiblement 3 et 9 mm, par exemple d'environ 7 mm ;
- une longueur L mesurée selon la direction radiale comprise entre sensiblement 8 et 18 mm, par exemple d'environ 13 mm ;
- un écartement inter-lèvres D, mesuré entre les extrémités libres supérieures des lèvres 8, 9, compris entre sensiblement 8 et 18 mm, par exemple d'environ 12mm ;
- une épaisseur de la première lèvre 8 de l'ordre de 1,5 à 1,9 mm, avec par exemple une épaisseur e₁ de la première lèvre 8 mesurée au voisinage de la racine 8A qui est d'environ 1,6 mm, et une épaisseur e₂ de la première lèvre 8 mesurée au voisinage de l'extrémité libre 8B qui est d'environ 1,8 mm.

L'agencement particulier du joint d'étanchéité 4 relativement à l'ouverture 10, et la flexibilité adaptée de sa première lèvre 8, permet ainsi de libérer l'excès de pression d'une manière particulièrement maîtrisée, sans avoir recours à un déplacement radial du joint au travers d'une fenêtre d'extrusion comme dans l'art antérieur. L'invention permet ainsi de réduire de manière très significative la dispersion de la valeur du seuil de sécurité. En outre, la vapeur s'échappant par l'ouverture de fuite 10 est propulsée sensiblement vers le haut et ne risque donc pas d'éteindre la flamme de la plaque de cuisson ou de provoquer un déplacement de l'appareil 1 par effet de réaction.

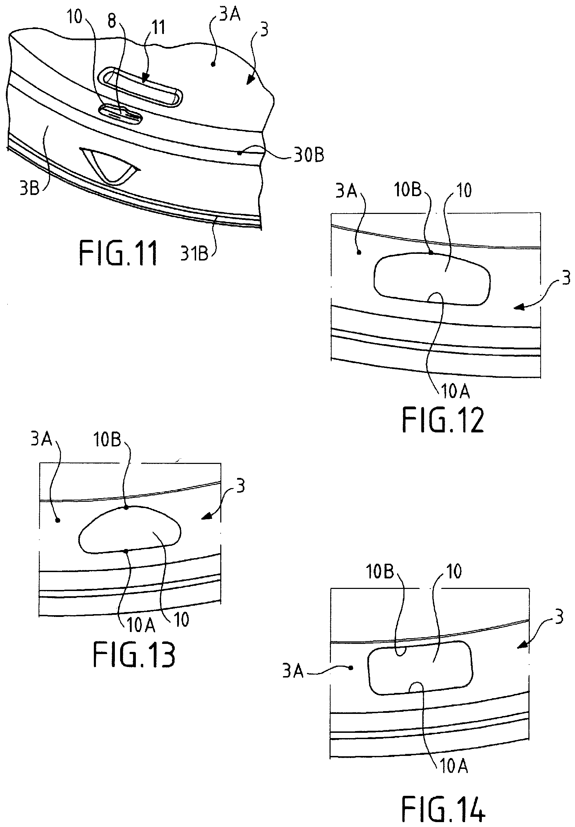

Afin de permettre l'apparition d'une fuite de vapeur au seuil de sécurité précis souhaité, l'ouverture de fuite 10 présente avantageusement une forme sensiblement allongée (comme illustré aux figures) par exemple une forme globalement oblongue, et est disposée de façon à s'étendre longitudinalement selon une direction tangentielle qui est sensiblement perpendiculaire à la direction radiale. En d'autres termes, l'ouverture de fuite présente une forme qui est sensiblement plus longue que large et s'étend, dans le sens de la longueur, sensiblement perpendiculairement à la direction radiale, de façon à ce que la rupture d'étanchéité soit obtenue par un déplacement de la portion extrêmale libre 8B qui est transversal à un grand côté (bord 10B) de l'ouverture de fuite 10. Avantageusement, et comme illustré aux figures, l'ouverture de fuite 10 présente un bord long intérieur 10B qui est incurvé vers l'intérieur du couvercle 3, c'est-à-dire en direction de l'axe central X-X'. Cette courbure vers l'intérieur favorise le déclenchement maîtrisé et progressif de la fuite, en permettant à la première lèvre 8 de découvrir progressivement une zone de l'ouverture de fuite 10 dont la superficie est de plus en plus importante. Dans l'exemple illustré aux figures 1 à 12, l'ouverture de fuite présente un bord long extérieur 10A sensiblement rectiligne et un bord long intérieur 10B sensiblement courbe de sorte que le contour de l'ouverture de fuite 10 présente sensiblement une forme convexe. Dans la variante alternative de la figure 13, le bord long extérieur 10A est là encore rectiligne tandis que le bord long intérieur 10B est courbe avec une courbure plus marquée que dans l'exemple de la figure 12. Enfin, dans l'exemple alternatif de la figure 14, l'ouverture de fuite 10 présente cette fois une forme sensiblement rectangulaire avec ses bords longs extérieur 10A et intérieur 10B sensiblement rectilignes et parallèles entre eux.

L'invention permet ainsi un déclenchement précis du phénomène de fuite de sécurité par l'ouverture 10, phénomène de fuite qui se produira à un niveau de pression significativement inférieur à celui auquel une hypothétique rupture de l'étanchéité entre la lèvre inférieure 9 et la cuve 2. L'un des intérêts de l'invention dans son mode de réalisation préférentiel réside en particulier dans le fait que le phénomène de fuite de sécurité par l'ouverture 10 est indépendant de la nature du contact étanche entre la deuxième lèvre 9 et la cuve 2.

Bien entendu, l'invention n'est pas limitée à une forme spécifique d'ouverture de fuite 10, même si une forme asymétrique avec un bord long intérieur 10B courbe est préférée.

Afin de compenser la possible fragilisation locale du couvercle 3 découlant de la présence de l'ouverture de fuite 10 ménagée à travers la paroi supérieure 3A, ledit couvercle 3 comprend avantageusement un renfort 11 qui est aligné radialement avec l'ouverture de fuite 10 et est disposé entre le centre du couvercle 3 (par lequel passe l'axe central X-X') et ladite ouverture de fuite 10. De préférence, le renfort 11 est formé par une zone déformée localement du couvercle 3, et de façon encore plus préférentielle par une zone emboutie du couvercle 3. Dans le mode de réalisation illustré aux figures, ladite zone emboutie est disposée au voisinage de l'ouverture de fuite 10, et se présente sous la forme d'une déformation locale de la paroi supérieure 3A en direction de l'intérieur de l'appareil 1. De préférence, ladite zone emboutie est sensiblement allongée et s'étend sensiblement parallèlement à l'ouverture de fuite 10, selon une longueur qui est de préférence supérieure à celle de l'ouverture de fuite 10.

Avantageusement, l'ouverture de fuite 10 est sensiblement alignée radialement avec l'une des excroissances 5A-5J du couvercle 3, ladite excroissance contribuant en effet, lorsqu'elle est par exemple formé par une déformation localisée de la jupe annulaire 3B, à compenser mécaniquement la fragilisation locale du couvercle 3 découlant de la présence de l'ouverture 10.

De préférence, conformément au mode de réalisation de la figure 15, la première lèvre 8 comprend une portion intermédiaire 80 située entre lesdites racine 8A et portion extrémale libre 8B, l'épaisseur de ladite portion intermédiaire 80 étant inférieure à celle de la portion extrémale libre 8B, de façon à favoriser la flexibilité de la première lèvre 8 et l'aptitude de la portion extrémale libre 8B à être repoussée à travers l'ouverture de fuite 10 dès que la pression régnant dans l'enceinte excède le seuil de sécurité.

Par exemple, comme illustré aux figures, l'épaisseur E de la première lèvre 8 est sensiblement constante entre la racine 8A et la portion extrémale libre 8B, ou du moins varie de manière progressive entre la racine 8A et la portion extrémale libre 8B, sauf en une zone correspondant à la portion intermédiaire 80 où l'épaisseur E est localement significativement inférieure.

En d'autres termes, la portion intermédiaire 80 forme une portion amincie qui permet d'obtenir localement une charnière facilitant la flexion locale de la première lèvre 8 et donc le passage de la portion extrémale libre 8B à travers l'ouverture de fuite 10. De préférence, la portion intermédiaire 80 amincie est située au voisinage immédiat de la portion extrémale libre 8B, de façon à être plus proche de ladite portion extrémale libre 8B que de la racine 8A. Dans ce mode de réalisation préférentiel, la première lèvre 8 bénéficie d'une aptitude à la déformation pilotée par une double charnière, l'une formée par le raccordement de la première lèvre 8 et du talon 7 au niveau de la racine 8A et l'autre formée par la portion intermédiaire amincie 80 à proximité de la portion extrémale libre 8B. Une telle conformation spécifique de la première lèvre 8 permet une excellente maîtrise de la rupture d'étanchéité et garantit la fiabilité du mécanisme de fuite de vapeur. Le recours à une portion intermédiaire amincie 80 n'est toutefois absolument pas obligatoire et il est parfaitement envisageable que l'épaisseur E de la première lèvre 8 soit sensiblement constante, ou en tout cas ne présente pas d'amincissement local.

Avantageusement, comme cela ressort notamment des figures 1, 2, 6 et 7, l'appareil de cuisson 1 comprend un capot 12 qui recouvre en partie le couvercle 3, et qui se présente par exemple sous la forme d'une pièce en matière plastique disposée sur le couvercle 3, de manière à surplomber localement la face extérieure 31A de la paroi supérieure 3A. Dans ce mode de réalisation préférentiel, le couvercle 3 est monté mobile relativement audit capot 12 entre une position de verrouillage dans laquelle le capot 12 recouvre l'ouverture de fuite 10 (figures 2 et 7) et une position de déverrouillage (figures 1 et 6) dans laquelle le capot 12 découvre, au moins en partie et de préférence totalement, ladite ouverture de fuite 10. Ainsi, lorsque le couvercle 3 est déverrouillé relativement à la cuve 2, l'ouverture de fuite 10 est parfaitement visible et accessible, ce qui en facilite son contrôle et sa maintenance par l'utilisateur qui peut aisément contrôler son état fonctionnel et la nettoyer le cas échéant. Au contraire, lorsque le couvercle 3 est verrouillé relativement à la cuve 2, l'ouverture de fuite 10 se retrouve sous le capot 12, ce qui permet, en cas de fuite de vapeur par l'ouverture 10, d'empêcher que le jet de vapeur correspondant ne vienne directement frapper l'utilisateur.

De façon préférentielle, le capot 12 est formé par une pièce en forme de traverse relativement à laquelle le couvercle 3 est monté à rotation selon l'axe central X-X'. La traverse en question déborde radialement du couvercle 3 de façon à pouvoir venir coopérer avec les poignées 2D, 2E pour bloquer angulairement la traverse dans un plan horizontal. Cette position de blocage angulaire correspond à la position d'attente de verrouillage illustré à la figure 1. À partir de cette position d'attente, l'utilisateur peut commander la rotation du couvercle 3 relativement à la traverse formant le capot 12, en actionnant par exemple un organe de commande 16 qui est formé en l'espèce par une poignée rotative en forme d'anse. Le couvercle va alors pivoter relativement au capot 12 de façon à être amené dans une position de verrouillage correspondant à l'inter-engagement des excroissances 5A-5J du couvercle 3 et des excroissances 6A-6J de la cuve 2. L'appareil 1 est alors prêt à monter en pression, et l'ouverture de fuite 10 est masquée par un écran formé par le capot 12 qui empêche tout jet direct de vapeur par l'ouverture de fuite 10 en direction de l'utilisateur.

L'invention concerne par ailleurs en tant que telle une méthode de dépressurisation sécuritaire d'un appareil de cuisson 1 d'aliments sous pression qui est de préférence conforme à la description qui précède. La méthode de dépressurisation sécuritaire selon l'invention est donc avantageusement une méthode de dépressurisation sécuritaire de l'appareil 1 décrit ci-avant. La méthode comporte, lorsque la pression excède le seuil de sécurité, une étape de déformation de la première lèvre 8 au cours de laquelle ladite première lèvre 8 subit, sous l'effet de la pression régnant dans l'enceinte, une déflexion suffisante pour que la portion extrémale libre 8B soit localement repoussée à travers l'ouverture de fuite 10, de façon à faire ainsi communiquer, par l'ouverture de fuite 10, l'intérieur de l'enceinte avec l'extérieur pour faire chuter la pression dans l'enceinte. Le talon 7 est quant à lui maintenu, de préférence par la jupe annulaire 3B qui fait localement office de butée, de façon à empêcher tout déplacement radial centrifuge du joint d'étanchéité 4 au droit de l'ouverture de fuite 10, sous l'effet de la pression régnant dans l'enceinte.

Un exemple de mise en oeuvre de cette méthode est illustré chronologiquement par les figures 8 à 10. Dans la figure 8, le joint d'étanchéité 4 est interposé entre la cuve 2 et le couvercle 3, de sorte que le talon 7 vient en appui contre la face intérieure 300B de la jupe annulaire 3B, tandis que les première et deuxième lèvres 8, 9 viennent respectivement en contact avec la face intérieure 30A de la paroi supérieure 3A du couvercle 3 et le bord supérieur (surface de repos R) de la cuve 2. Ensuite, sous l'effet de l'augmentation de la pression régnant au sein de l'enceinte, le talon 7 va venir se placer en butée dans le coin formé par la jonction de la paroi supérieure 3A et de la jupe annulaire 3B, tandis que les première et deuxième lèvres 8, 9 fléchissent (figure 9). Sous l'effet de cette flexion de la première lèvre 8, la portion extrémale libre 8B de cette dernière, va avoir tendance à glisser le long et contre la face intérieure 30A de la paroi supérieure 3A, pour venir se rapprocher progressivement de l'ouverture de fuite 10. Puis, dès que la pression régnant dans l'enceinte excède le seuil de sécurité, lequel seuil de sécurité correspond avantageusement à un niveau de pression anormal qui n'est atteint que lorsque les autres organes de sécurité (soupape de régulation de pression 13, soupape de sécurité à la surpression 15...) n'ont pas fonctionné, la déflexion subie localement par la première lèvre 8 est telle que la portion extrémale libre 8B va localement passer à travers l'ouverture de fuite 10, occasionnant une fuite de vapeur permettant de ramener la pression régnant au sein de l'enceinte à un niveau compatible avec la sécurité de l'utilisateur.

## Revendications

1. Appareil de cuisson (1) d'aliments sous pression comprenant une cuve (2) et un couvercle (3) destiné à former avec ladite cuve (2) une enceinte de cuisson, ledit couvercle (3) comprenant une paroi supérieure (3A) présentant un contour périphérique sensiblement circulaire ou ovale à partir duquel s'étend une jupe annulaire (3B), ledit appareil (1) comprenant également un joint d'étanchéité (4) interposé entre le couvercle (3) et la cuve (2) pour permettre la montée en pression de l'enceinte de cuisson, ledit joint d'étanchéité (4) comportant un talon annulaire périphérique (7) ainsi qu'une première lèvre (8) flexible qui s'étend à partir dudit talon (7) vers l'intérieur de l'appareil (1), selon une direction d'extension majoritairement radiale centripète, entre une racine (8A) solidaire du talon (7) et une portion extrémale libre (8B) en contact étanche avec ladite paroi supérieure (3A) du couvercle (3), ledit appareil (1) étant **caractérisé en ce qu'**il comprend une ouverture de fuite (10) ménagée à travers ladite paroi supérieure (3A), au-dessus du joint d'étanchéité (4), de façon à être obturée hermétiquement par ce dernier tant que la pression régnant au sein de l'enceinte n'excède pas un seuil de sécurité, la jupe annulaire (3B) formant une butée d'arrêt pour le talon (7) empêchant tout déplacement radial centrifuge du joint (4) au droit de l'ouverture de fuite (10), ladite première lèvre (8) présentant une flexibilité adaptée pour que la portion extrémale libre (8B) soit localement repoussée à travers l'ouverture de fuite (10) dès que la pression régnant dans l'enceinte excède ledit seuil de sécurité, de façon à faire ainsi communiquer par l'ouverture de fuite (10) l'intérieur de l'enceinte avec l'extérieur pour faire chuter la pression dans l'enceinte.

2. Appareil de cuisson (1) selon la revendication 1 **caractérisé en ce que** ladite ouverture de fuite (10) présente une forme sensiblement allongée et est disposée de façon à s'étendre longitudinalement selon une direction tangentielle sensiblement perpendiculaire à la direction radiale.

3. Appareil de cuisson (1) selon la revendication 2 **caractérisé en ce que** ladite ouverture de fuite (10) présente un bord long intérieur (10B) qui est incurvé vers l'intérieur du couvercle (3).

4. Appareil de cuisson (1) selon l'une des revendications 1 à 3 **caractérisé en ce que** ledit couvercle (3) comprend un renfort (11) qui est aligné radialement avec l'ouverture de fuite (10) et est disposé entre le centre du couvercle (3) et ladite ouverture de fuite (10).

5. Appareil de cuisson (1) selon la revendication 4 **caractérisé en ce que** ledit renfort (11) est formé par une zone emboutie du couvercle.

6. Appareil de cuisson (1) selon l'une des revendications 1 à 5 **caractérisé en ce que** le talon (7) présente une section transversale sensiblement constante sur tout le périmètre du joint (4).

7. Appareil de cuisson (1) selon l'une des revendications 1 à 6 **caractérisé en ce que** ladite première lèvre (8) présente une section transversale sensiblement constante sur tout le périmètre du joint (4).

8. Appareil de cuisson (1) selon l'une des revendications 1 à 7 **caractérisé en ce que** ledit joint (4) présente une forme de révolution.

9. Appareil de cuisson (1) selon l'une des revendications 1 à 8 **caractérisé en ce que** ladite première lèvre (8) s'étend, à partir dudit talon (7), selon une incidence oblique vers l'intérieur de l'appareil (1) et vers le haut.

10. Appareil de cuisson (1) selon l'une des revendications 1 à 9 **caractérisé en ce que** ladite première lèvre (8) comprend une portion intermédiaire (80) entre lesdites racine (8A) et portion extrémale libre (8B), l'épaisseur de ladite portion intermédiaire (80) étant inférieure à celle de ladite portion extrémale libre (8B), de façon à favoriser la flexibilité de la première lèvre (8).

11. Appareil de cuisson selon l'une des revendications précédentes **caractérisé en ce que** ledit joint d'étanchéité (4) comporte une seconde lèvre (9) s'étendant également à partir du talon (7) vers l'intérieur de l'appareil (1), ladite seconde lèvre (9) étant destinée à venir en contact étanche avec la cuve (2).

12. Appareil de cuisson (1) selon la revendication 11 **caractérisé en ce que** ledit joint (4) est symétrique relativement à un plan horizontal médian (P) qui passe entre les première et deuxième lèvres (8,9).

13. Appareil de cuisson (1) selon l'une des revendications 1 à 12 **caractérisé en ce qu'**il comprend un système de verrouillage/déverrouillage du couvercle (3) relativement à la cuve (2), ledit système de verrouillage/déverrouillage étant un système à baïonnette, ou un système à mâchoires mobiles, ou un système à segments mobiles.

14. Appareil de cuisson (1) selon l'une des revendications 1 à 13 **caractérisé en ce qu'**il comprend un capot (12) qui recouvre en partie le couvercle (3), ledit couvercle (3) étant monté mobile relativement au capot (12) entre une position de verrouillage dans laquelle le capot (12) recouvre ladite ouverture de fuite (10) et une position de déverrouillage dans laquelle le capot (12) découvre ladite ouverture de fuite (10).

15. Méthode de dépressurisation sécuritaire d'un appareil de cuisson (1) d'aliments sous pression comprenant une cuve (2) et un couvercle (3) destiné à former avec ladite cuve (2) une enceinte de cuisson, ledit couvercle (3) comprenant une paroi supérieure (3) présentant un contour périphérique sensiblement circulaire ou ovale, ledit appareil (1) comprenant également un joint d'étanchéité (4) interposé entre le couvercle (3) et la cuve (2) pour permettre la montée en pression de l'enceinte de cuisson, ledit joint d'étanchéité (4) comportant un talon annulaire périphérique (7) ainsi qu'une première lèvre (8) flexible qui s'étend à partir dudit talon (7) vers l'intérieur de l'appareil (1), selon une direction d'extension majoritairement radiale centripète, entre une racine (8A) solidaire du talon (7) et une portion extrémale libre (8B) en contact étanche avec ladite paroi supérieure (3A) du couvercle (3), ladite méthode étant **caractérisée en ce que** l'appareil (1) de cuisson d'aliments sous pression comprend une ouverture de fuite (10) ménagée à travers ladite paroi supérieure (3A), au-dessus du joint d'étanchéité (4), de façon à être obturée hermétiquement par ce dernier tant que la pression régnant au sein de l'enceinte n'excède pas un seuil de sécurité, ladite méthode comportant, lorsque la pression excède le seuil de sécurité, une étape de déformation de la première lèvre (8) au cours de laquelle ladite première lèvre (8) subit, sous l'effet de la pression régnant dans l'enceinte, une déflexion suffisante pour que la portion extrémale libre (8B) soit localement repoussée à travers l'ouverture de fuite (10), de façon à faire ainsi communiquer par l'ouverture de fuite l'intérieur de l'enceinte avec l'extérieur pour faire chuter la pression dans l'enceinte, le talon (7) étant maintenu de façon à empêcher tout déplacement radial centrifuge du joint (4) au droit de l'ouverture de fuite (10), sous l'effet de la pression régnant dans l'enceinte.

## Patentansprüche

1. Gerät (1) zum Kochen von Nahrungsmitteln unter Druck, umfassend einen Behälter (2) und einen Deckel (3), der dazu bestimmt ist, mit dem Behälter (2) einen Garraum zu bilden, wobei der Deckel (3) eine obere Wand (3A) umfasst, die eine im Wesentlichen kreisförmige oder ovale Umfangskontur aufweist, von der aus sich eine ringförmige Schürze (3B) erstreckt, wobei das Gerät (1) auch eine Dichtung (4) umfasst, die zwischen dem Deckel (3) und dem Behälter (2) eingefügt ist, um den Druckaufbau des Garraums zu ermöglichen, wobei die Dichtung (4) einen ringförmigen Umfangswulst (7) sowie eine erste flexible Lippe (8) aufweist, die sich von dem Wulst (7) zum Inneren des Geräts (1) in eine mehrheitlich radiale zentripetale Ausdehnungsrichtung zwischen einem mit dem Wulst (7) verbundenen Ansatz (8A) und einem freien Endabschnitt (8B) in dichtem Kontakt mit der oberen Wand (3A) des Deckels (3) erstreckt, wobei das Gerät (1) **dadurch gekennzeichnet ist, dass** es eine Austrittsöffnung (10) umfasst, die durch die obere Wand (3A) hindurch über der Dichtung (4) vorgesehen ist, um hermetisch von dieser letztgenannten verschlossen zu werden, solange der innerhalb des Raums herrschende Druck nicht eine Sicherheitsgrenze überschreitet, wobei die ringförmige Schürze (3B) einen Halteanschlag für den Wulst (7) bildet, der jede zentrifugale radiale Verlagerung der Dichtung (4) im rechten Winkel zur Austrittsöffnung (10) verhindert, wobei die erste Lippe (8) eine Flexibilität aufweist, die dazu vorgesehen ist, dass der freie Endabschnitt (8B) lokal durch die Austrittsöffnung (10) zurückgeschoben wird, sobald der in dem Behälter herrschende Druck die Sicherheitsgrenze überschreitet, um auf diese Weise durch die Austrittsöffnung (10) das Innere des Behälters mit außen in Verbindung zu bringen, um den Druck im Behälter abfallen zu lassen.

2. Kochgerät (1) nach Anspruch 1, **dadurch gekennzeichnet, dass** die Austrittsöffnung (10) eine im Wesentlichen längliche Form aufweist und derart angeordnet ist, dass sie sich längs in eine Tangentialrichtung im Wesentlichen senkrecht zur Radialrichtung erstreckt.

3. Kochgerät (1) nach Anspruch 2, **dadurch gekennzeichnet, dass** die Austrittsöffnung (10) einen langen Innenrand (10B) aufweist, der zum Inneren des Deckels (3) gekrümmt ist.

4. Kochgerät (1) nach einem der Ansprüche 1 bis 3, **dadurch gekennzeichnet, dass** der Deckel (3) eine Verstärkung (11) umfasst, die radial mit der Austrittsöffnung (10) ausgerichtet und zwischen der Mitte des Deckels (3) und der Austrittsöffnung (10) angeordnet ist.

5. Kochgerät (1) nach Anspruch 4, **dadurch gekennzeichnet, dass** die Verstärkung (11) von einer tiefgezogenen Zone des Deckels gebildet ist.

6. Kochgerät (1) nach einem der Ansprüche 1 bis 5, **dadurch gekennzeichnet, dass** der Wulst (7) einen im Wesentlichen konstanten Querschnitt über den gesamten Umfang der Dichtung (4) aufweist.

7. Kochgerät (1) nach einem der Ansprüche 1 bis 6, **dadurch gekennzeichnet, dass** die erste Lippe (8) einen im Wesentlichen konstanten Querschnitt über den gesamten Umfang der Dichtung (4) aufweist.

8. Kochgerät (1) nach einem der Ansprüche 1 bis 7, **dadurch gekennzeichnet, dass** die Dichtung (4) eine Umdrehungsform aufweist.

9. Kochgerät (1) nach einem der Ansprüche 1 bis 8, **dadurch gekennzeichnet, dass** sich die erste Lippe (8) von dem Wulst (7) aus in eine schräge Richtung zum Inneren des Geräts (1) und nach oben erstreckt.

10. Kochgerät (1) nach einem der Ansprüche 1 bis 9, **dadurch gekennzeichnet, dass** die erste Lippe (8) einen Zwischenabschnitt (80) zwischen dem Ansatz (8A) und dem freien Endabschnitt (8B) umfasst, wobei die Dicke des Zwischenabschnitts (80) geringer als jene des freien Endabschnitts (8B) ist, um die Flexibilität der ersten Lippe (8) zu begünstigen.

11. Kochgerät nach einem der vorhergehenden Ansprüche, **dadurch gekennzeichnet, dass** die Dichtung (4) eine zweite Lippe (9) umfasst, die sich ebenfalls von dem Wulst (7) aus zum Inneren des Geräts (1) erstreckt, wobei die zweite Lippe (9) dazu bestimmt ist, mit dem Behälter (2) in dichten Kontakt zu kommen.

12. Kochgerät (1) nach Anspruch 11, **dadurch gekennzeichnet, dass** die Dichtung (4) in Bezug zu einer horizontalen Mittelebene (P), die zwischen der ersten und zweiten Lippe (8, 9) verläuft, symmetrisch ist.

13. Kochgerät (1) nach einem der Ansprüche 1 bis 12, **dadurch gekennzeichnet, dass** es ein Verriegelungs-/Entriegelungssystem des Deckels (3) in Bezug zum Behälter (2) umfasst, wobei das Verriegelungs-/Entriegelungssystem ein Bajonettverschlusssystem oder ein System mit beweglichen Backen oder ein System mit beweglichen Segmenten ist.

14. Kochgerät (1) nach einem der Ansprüche 1 bis 13, **dadurch gekennzeichnet, dass** es eine Kappe (12) umfasst, die teilweise den Deckel (3) bedeckt, wobei der Deckel (3) in Bezug zur Kappe (12) zwischen einer Verriegelungsposition, in der die Kappe (12) die Austrittsöffnung (10) abdeckt, und einer Entriegelungsposition, in der die Kappe (12) die Austrittsöffnung (10) freilegt, beweglich montiert ist.

15. Verfahren zum sicheren Druckabbau eines Geräts (1) zum Kochen von Nahrungsmitteln unter Druck, umfassend einen Behälter (2) und einen Deckel (3), der dazu bestimmt ist, mit dem Behälter (2) einen Garraum zu bilden, wobei der Deckel (3) eine obere Wand (3A) umfasst, die eine im Wesentlichen kreisförmige oder ovale Umfangskontur aufweist, wobei das Gerät (1) auch eine Dichtung (4) umfasst, die zwischen dem Deckel (3) und dem Behälter (2) eingefügt ist, um den Druckaufbau des Garraums zu ermöglichen, wobei die Dichtung (4) einen ringförmigen Umfangswulst (7) sowie eine erste flexible Lippe (8) aufweist, die sich von dem Wulst (7) zum Inneren des Geräts (1) in eine mehrheitlich radiale zentripetale Ausdehnungsrichtung zwischen einem mit dem Wulst (7) verbundenen Ansatz (8A) und einem freien Endabschnitt (8B) in dichtem Kontakt mit der oberen Wand (3A) des Deckels (3) erstreckt, wobei das Verfahren **dadurch gekennzeichnet ist, dass** das Gerät (1) zum Kochen von Nahrungsmitteln unter Druck eine Austrittsöffnung (10) umfasst, die durch die obere Wand (3A) hindurch über der Dichtung (4) vorgesehen ist, um hermetisch von dieser letztgenannten verschlossen zu werden, solange der innerhalb des Raums herrschende Druck nicht eine Sicherheitsgrenze überschreitet, wobei das Verfahren, wenn der Druck die Sicherheitsgrenze überschreitet, einen Schritt der Verformung der ersten Lippe (8) umfasst, während dessen die erste Lippe (8) unter der Wirkung des in dem Raum herrschenden Drucks einer ausreichenden Ablenkung unterzogen wird, dass der freie Endabschnitt (8B) lokal durch die Austrittsöffnung (10) zurückgeschoben wird, um auf diese Weise durch die Austrittsöffnung das Innere des Behälters mit außen in Verbindung zu bringen, um den Druck in dem Behälter abfallen zu lassen, wobei der Wulst (7) gehalten wird, um jede zentrifugale radiale Verlagerung der Dichtung (4) im rechten Winkel zu der Austrittsöffnung (10) unter der Wirkung des in dem Behälter herrschenden Drucks zu verhindern.

## Claims

1. A cooking utensil (1) for cooking food under pressure and comprising a vessel (2) and a lid (3) for co-operating with said vessel (2) to form a cooking enclosure, said lid (3) having a top wall (3A) presenting a peripheral outline that is substantially circular or oval and from which there extends an annular skirt (3B), said utensil (1) also having a sealing gasket (4) interposed between the lid (3) and the vessel (2) in order to enable the pressure inside the cooking enclosure to rise, said sealing gasket (4) comprising a peripheral annular ring (7) together with a first flexible lip (8) projecting from said ring (7) towards the inside of the utensil (1) in a direction that is mainly radially inwards, between a root (8A) secured to the ring (7) and a free end portion (8B) in sealing contact with said top wall (3A) of the lid (3), said utensil (1) being **characterized in that** it includes a leakage opening (10) formed through said top wall (3A) above the sealing gasket (4) so as to be hermetically closed by the gasket so long as the pressure that exists inside the enclosure does not exceed a safety threshold, the annular skirt (3B) forming a stop abutment for the ring (7) preventing any outward radial movement of the gasket (4) in register with the leakage opening (10), said first lip (8) presenting flexibility that is appropriate for the free end portion (8B) to be pushed back locally through the leakage opening (10) as soon as the pressure that exists inside the enclosure exceeds said safety threshold, thus causing the inside of the enclosure to communicate with the outside via the leakage opening (10) in order to cause the pressure inside the enclosure to drop.

2. A cooking utensil (1) according to claim 1, **characterized in that** said leakage opening (10) is substantially elongate in shape and is arranged so as to extend longitudinally in a tangential direction that is substantially perpendicular to the radial direction.

3. A cooking utensil (1) according to claim 2, **characterized in that** said leakage opening (10) presents an inside long edge (10B) that is curved towards the inside of the lid (3).

4. A cooking utensil (1) according to any one of claims 1 to 3, **characterized in that** said lid (3) includes reinforcement (11) that is radially in alignment with the leakage opening (10) and that is arranged between the center of the lid (3) and said leakage opening (10).

5. A cooking utensil (1) according to claim 4, **characterized in that** said reinforcement (11) is formed by a stamped zone of the lid.

6. A cooking utensil (1) according to any one of claims 1 to 5, **characterized in that** the ring (7) presents a cross-section that is substantially constant over the entire perimeter of the gasket (4).

7. A cooking utensil (1) according to any one of claims 1 to 6, **characterized in that** said first lip (8) presents a cross-section that is substantially constant over the entire perimeter of the gasket (4).

8. A cooking utensil (1) according to any one of claims 1 to 7, **characterized in that** said gasket (4) is in the form of a body of revolution.

9. A cooking utensil (1) according to any one of claims 1 to 8, **characterized in that** said first lip (8) extends from said ring (7) at an upwardly oblique angle towards the inside of the utensil (1).

10. A cooking utensil (1) according to any one of claims 1 to 9, **characterized in that** said first lip (8) includes an intermediate portion (80) between said root (8A) and said free end portion (8B), the thickness of said intermediate portion (80) being less than the thickness of said free end portion (8B) so as to enhance the flexibility of the first lip (8).

11. A cooking utensil according to any preceding claim, **characterized in that** said sealing gasket (4) has a second lip (9) extending likewise from said ring (7) towards the inside of the utensil (1), said second lip (9) being for coming into sealing contact with the vessel (2).

12. A cooking utensil (1) according to claim 11, **characterized in that** said gasket (4) is symmetrical about a horizontal midplane (P) passing between the first and second lips (8, 9).

13. A cooking utensil (1) according to any one of claims 1 to 12, **characterized in that** it includes a locking/unlocking system for locking and unlocking the lid (3) relative to the vessel (2), said locking/unlocking system being a bayonet system or a movable jaw system or a movable segment system.

14. A cooking utensil (1) according to any one of claims 1 to 13, **characterized in that** it includes a cap (12) covering part of the lid (3), said lid (3) being mounted to move relative to the cap (12) between a locked position in which the cap (12) covers said leakage opening (10), and an unlocked position in which the cap (12) uncovers said leakage opening (10).

15. A method of safely depressurizing a utensil (1) for cooking food under pressure, the utensil comprising a vessel (2) and a lid (3) for co-operating with said vessel (2) to form a cooking enclosure, said lid (3) having a top wall (3A) presenting a peripheral outline that is substantially circular or oval, said utensil (1) also having a sealing gasket (4) interposed between the lid (3) and the vessel (2) in order to enable the pressure inside the cooking enclosure to rise, said sealing gasket (4) comprising a peripheral annular ring (7) together with a first flexible lip (8) projecting from said ring (7) towards the inside of the utensil (1) in a direction that is mainly radially inwards, between a root (8A) secured to the ring (7) and a free end portion (8B) in sealing contact with said top wall (3A) of the lid (3), said method being **characterized in that** the utensil (1) for cooking food under pressure has a leakage opening (10) formed through said top wall (3A) above the sealing gasket (4) so as to be hermetically closed by the gasket so long as the pressure that exists inside the enclosure does not exceed a safety threshold, said method comprising, when the pressure exceeds the safety threshold, a step of deforming the first lip (8) during which said first lip (8), is subjected under the effect of the pressure that exists inside the enclosure to sufficient bending for the free end portion (8B) to be pushed locally through the leakage opening (10) so as to cause the inside of the enclosure to communicate with the outside through the leakage opening so as to cause the pressure inside the enclosure to drop, the ring (7) being held in such a manner as to prevent any outward radial movement of the gasket (4) in register with the leakage opening (10) under the effect of the pressure that exists inside the enclosure.
